# EUROPÄISCHE PATENTANMELDUNG

(11) **EP 4 693 834 A1**
(43) Veröffentlichungstag der Anmeldung: **11.02.2026**
(21) Anmeldenummer: 23931220.0
(22) Anmeldetag: 03.04.2023
(51) Int. Cl.: H02K 3/22

(54) **STATOR UND MOTOR**

(71) Anmelder: Schaeffler Technologies AG & Co. KG, 91074 Herzogenaurach (DE)
(72) Erfinder: LI, Yue, Shanghai 201804 (CN); HUANG, Jiancheng, Shanghai 201804 (CN); XIA, Xiaojun, Shanghia 201804 (CN); XIA, Jianyun, Shanghai 201804 (CN)
(74) Vertreter: Schaeffler Technologies
(86) Internationale Anmeldenummer: PCT/CN2023/085928
(87) Internationale Veröffentlichungsnummer: WO 2024/207143

(57) **Zusammenfassung**

Die vorliegende Erfindung betrifft einen Stator für einen Motor, umfassend einen Statorkern, eine Wicklungsstruktur und eine Kühleinrichtung, wobei der Statorkern Nuten zum Aufnehmen der einzufügenden Wicklungsstruktur aufweist, und die Wicklungsstruktur jeweils aus den Nuten des Statorkerns an beiden axialen Endflächen herausragt und dabei ein erstes Ende und ein zweites Ende der Wicklungsstruktur bildet, wobei das Leiterelement der Wicklungsstruktur ein Hohlleiter ist, in dem ein erster Kühlkanal der Kühleinrichtung angeordnet ist, ein Kühlmitteleinlass des ersten Kühlkanals sich im ersten Ende befindet und ein Kühlmittelauslass des ersten Kühlkanals sich im zweiten Ende befindet, wobei die Kühleinrichtung ein Dichtelement aufweist, das mit dem den Stator umgebenden Motorgehäuse auf der Seite des ersten Endes einen den Kühlmitteleinlass umschließenden Dichtraum bildet. Ferner betrifft die Erfindung einen Motor mit einem solchen Stator.

## Beschreibung

### Technisches Gebiet

Die vorliegende Erfindung betrifft das technische Gebiet von Fahrzeugmotoren, insbesondere als Antriebseinheit in reinen Elektro- und Hybridelektrofahrzeugen, und insbesondere ein Kühlsystem für einen Stator.

### Hintergrund der Erfindung

In Fahrzeugen mit neuer Energiequelle ist der Motor ein Kernbauteil. Während des Motorbetriebs entsteht eine große Menge an Wärme, und eine ausreichende Kühlung kann einen ordnungsgemäßen Betrieb des Motors gewährleisten. In der aktuellen praktischen Produktion verwendet der Stator eines Motors für ein Fahrzeug mit neuer Energiequelle normalerweise einen Vollleiter als Statorwicklungen. Da der Leiter eine Wärmequelle ist, ist eine Zwangskühlung erforderlich. Im Stand der Technik werden hauptsächlich indirekte Kühllösungen verwendet, wie z. B. die Verwendung eines Kühlwassermantels, sodass Kühlflüssigkeit durch Wassermantelkanäle strömt, oder das Durchströmen von Kühlflüssigkeit durch im Stator vorgesehene Statornuten zur indirekten Kühlung.

Aus CN109768639A ist ein Motor und eine Kühlstruktur für einen Motorstator bekannt, die einen Kühlwassermantel umfasst, der auf der Außenringfläche des Motorstators aufgesetzt ist. Auf der Innenringfläche des Wassermantels ist eine axial verlaufende Wassermantelnut vorgesehen, in der ein Zwischenmedium angeordnet ist und dieses Zwischenmedium und die Außenringfläche des Motorstators bilden ein Positionierungsloch. Die Kühlstruktur umfasst außerdem einen elastischen Stift, der insgesamt eine ringförmige Struktur bildet. Der elastische Stift ist in dem Positionierungsloch befestigt. Die Form des Positionierungslochs passt zu der Form des elastischen Stifts. Der elastische Stift weist eine radiale Öffnung auf, die mit seiner Innenringfläche verbunden ist und sich entlang der axialen Richtung des elastischen Stifts von einem Ende zum anderen Ende erstreckt.

Die indirekte Kühlung massiver Leiter im Stand der Technik ist für hohe Wirkungsgradanforderungen nicht ausreichend. Die Kühlflüssigkeit fließt durch den Wassermantelkanal und die Wärme von den massiven Leitern wird über das Aluminiumgehäuse zur Kühlflüssigkeit abgeleitet, um Wärme abzuführen. Der Kühlpfad verläuft über Vollleiter - Isolierung - Statorkern - Aluminiumgehäuse - Kühlflüssigkeit. Aufgrund des langen Kühlpfads ist der Kühleffekt schlecht. Obwohl die direkte Kühlung des Hohlleiters des Stators den Kühlbedarf decken kann, ist die Abdichtung zwischen der Hohlwicklung und dem Gehäuse nur schwer zu realisieren. Die Öleintritts- und Ölaustrittskammer sind auf einer Seite getrennt, was die Struktur komplex und die Kosten hoch macht. In der praktischen Produktion konnte bisher keine praktikable technische Lösung gefunden werden.

### Gegenstand der Erfindung

Die mit der vorliegenden Erfindung zu lösende technische Aufgabe besteht darin, ein Kühlsystem bereitzustellen, das eine direkte Kühlung des Stators ermöglicht, das für Motorstator mit Hohlleitern geeignet ist, einen einfachen Aufbau aufweist und die Dichtwirkung des Kühlsystems weiter verbessern kann.

Die technische Aufgabe wird durch einen Stator für einen Motor gelöst. Der Stator umfasst einen Statorkern, eine Wicklungsstruktur und eine Kühleinrichtung, wobei der Statorkern Nuten zum Aufnehmen der einzufügenden Wicklungsstruktur aufweist, die Wicklungsstruktur jeweils aus den Nuten an den axialen beiden Endflächen des Statorkerns herausragt und dabei ein erstes Ende und ein zweites Ende der Wicklungsstruktur bildet, und das Leiterelement der Wicklungsstruktur ein Hohlleiter ist, in dem ein erster Kühlkanal der Kühleinrichtung angeordnet ist. Ein Kühlmitteleinlass des ersten Kühlkanals befindet sich am ersten Ende und ein Kühlmittelauslass des ersten Kühlkanals befindet sich am zweiten Ende. Dabei weist die Kühleinrichtung ein Dichtelement auf, das mit dem den Stator umgebenden Motorgehäuse auf der Seite des ersten Endes einen den Kühlmitteleinlass umschließenden Dichtraum bildet.

Gemäß der technischen Lösung der vorliegenden Erfindung wird ein verbessertes Kühlsystem bereitgestellt. Der Kühlmitteleinlass befindet sich auf der Seite des Motorgehäuses, d. h. der Seite des ersten Endes; der Kühlmittelauslass befindet sich auf der Seite des Motordeckels, d. h. der Seite des zweiten Endes. Der Stator, das Dichtelement und das Gehäuse bilden auf der Seite des ersten Endes einen Dichtraum, und die Seite des zweiten Endes ist vorzugsweise als offener Hohlraum ausgebildet. Das Kühlmittel tritt zunächst in den Dichtraum ein, strömt dann durch den Kühlmitteleinlass ein und fließt vom ersten Ende zum zweiten Ende. Da die Wicklungsstruktur die meiste Wärme erzeugt, leiten die Hohlleiter das Kühlmittel an die Innenfläche des Stators. Der Kühlpfad verläuft direkt vom Kühlmittel zur Innenfläche des Hohlleiters, was den Kühlpfad erheblich verkürzt. Die Beziehung zur Position des Motorgehäuses wird genutzt, um die Dichtstruktur zu vereinfachen. Da Kühlmitteleinlass und Kühlmittelauslass beidseitig getrennt sind, muss nur die Öleinlassseite abgedichtet werden und die Ölauslassseite kann als offener Hohlraum ausgebildet sein. Die Dichtstruktur der Öleinlasskammer kann einfach durch Stator, Gehäuse und Dichtelement realisiert werden.

Gemäß einer bevorzugten Ausführungsform der vorliegenden Erfindung weist das Motorgehäuse einen Einspritzkanal zum Einspritzen eines Kühlmittels in den Dichtraum auf. Die Verwendung des Motorgehäuses zur Ausbildung eines Einspritzkanals zum Einspritzen des Kühlmittels ist strukturell einfach und leicht zu bearbeiten, wodurch die Herstellungskosten gesenkt werden. Denkbar ist auch, am Motorgehäuse eine Dichtungsnut vorzusehen und mittels des Klebstoffs das Dichtelement in der Dichtungsnut zu fixieren. Im Motorgehäuse wird eine ringförmige Dichtungsnut vorgesehen, in der der Klebstoff auf die Dichtungsnut aufgetragen wird und anschließend wird das Dichtelement in die Dichtungsnut eingesetzt. Der Klebstoff verbindet somit das Motorgehäuse und das Dichtelement dicht miteinander, und die Statoroberfläche wird gegen das Gehäuse und das Dichtelement gepresst, um so auf der Seite des ersten Endes den Dichtraum zu bilden. Eine weitere Alternative besteht darin, das Dichtelement mit dem Motorgehäuse einstückig auszubilden, z. B. durch Umspritzen des Dichtelements am Motorgehäuse, was die Dichtungsnut und den Kleber einspart und den Montageprozess vereinfacht.

Gemäß einer bevorzugten Ausführungsform der vorliegenden Erfindung ist die Wicklungsstruktur eine Haarnadelwicklung, wobei die Haarnadelwicklung einen Haarnadelleiter aufweist, der einen Schenkel und einen Kopf aufweist, wobei der Schenkel in die Nut eingesetzt ist und sich nach außen erstreckt, um das zweite Ende zu bilden, der Kopf das erste Ende bildet, ein Kühlmitteleinlass am Schenkel vorgesehen ist und ein Kühlmittelauslass am Kopf vorgesehen ist. Der in Haarnadelwicklungen verwendete Flachdraht weist eine regelmäßigere Form auf und reduziert den Wärmewiderstand in den Statornuten. Er sorgt für eine effizientere Wärmeübertragung und verbessert somit die Spitzenleistung und Dauerleistung. Durch die Anordnung eines Kühlmitteleinlasses am Kopf und eines Kühlmittelauslasses am Schenkel kann der Kühlkanal verlängert und die Kühlung ausreichender gemacht werden. Ferner bevorzugt sind die axialen Enden des Schenkels verschweißt und in radialer Richtung des Schenkels ist eine Öffnung als Kühlmittelauslass der ersten Kühlkanäle vorgesehen. Es kann weiter eingeschränkt sein, dass der Kühlmittelauslass weiter von der Schweißstelle des Schenkels entfernt angeordnet ist, und insbesondere kann das Bohren von Löchern nach dem Schweißen durchgeführt werden, wodurch die Verarbeitungstechnologie optimiert und der Einfluss des Schweißvorgangs auf den Kühlmittelauslass vermieden wird.

Gemäß einer bevorzugten Ausführungsform der vorliegenden Erfindung weist der Statorkern einen zweiten Kühlkanal am Umfang der Nuten des Stators auf, und ein Kühlmitteleinlass des zweiten Kühlkanals befindet sich im Dichtraum. Durch die Anordnung eines zweiten Kühlkanals im Statorkern kann die Kühleffizienz weiter verbessert werden. Auch der Einlass des zweiten Kühlkanals ist im Dichtraum angeordnet, was die eingangsseitige Anordnung des Kühlsystems vereinfacht, Bauteile einspart und die Herstellungskosten senkt.

Die obige technische Aufgabe kann auch durch einen Motor gelöst werden, der einen Stator gemäß den obigen Merkmalen aufweist.

### Beschreibung der Figuren

Die bevorzugten Ausführungsformen der vorliegenden Erfindung werden unten in Verbindung mit den Zeichnungen weiter erläutert. In den Zeichnungen zeigt:
Fig. 1 zeigt eine perspektivische Ansicht und eine teilweise vergrößerte Ansicht eines erfindungsgemäßen Stators;
Fig. 2 zeigt ein schematisches Diagramm einer Haarnadelwicklung eines erfindungsgemäßen Stators;
Fig. 3 zeigt eine Querschnittsansicht eines erfindungsgemäßen Stators;
Fig. 4 zeigt eine Ausschnittvergrößerung des in Fig. 3 gezeigten Stators.

In der vorliegenden Erfindung beziehen sich eine axiale Richtung, radiale Richtung und Umfangsrichtung, sofern nicht anders angegeben, jeweils auf die axiale Richtung, radiale Richtung und Umfangsrichtung des erfindungsgemäßen Motorstators.

### Detaillierte Ausführungsformen

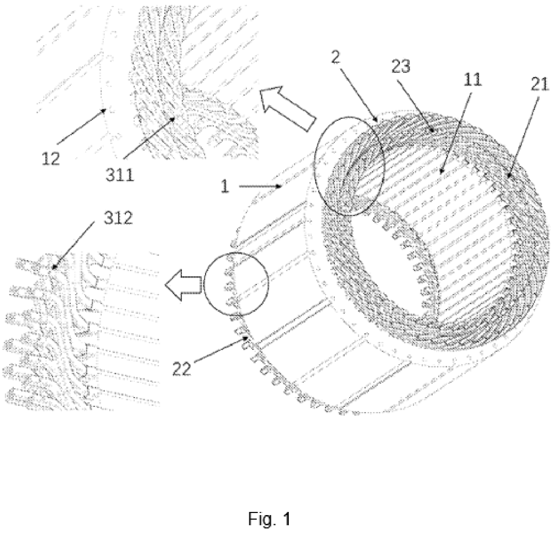

Wie in Fig.1 gezeigt, umfasst der erfindungsgemäße Stator einen Statorkern 1 und eine Wicklungsstruktur 2. Der Statorkern 1 ist mit Nuten 11 versehen, die entlang der Umfangsrichtung des Statorkerns 1 angeordnet sind, und die Wicklungsstruktur 2 ist in die Nuten 11 eingesetzt. Die Wicklungsstruktur erstreckt sich aus den Nuten 11 an den axialen beiden Endflächen des Statorkerns 1 heraus und bildet ein erstes Ende 21 und ein zweites Ende 22 der Wicklungsstruktur 2. Das Leiterelement der Wicklungsstruktur 2 ist ein Hohlleiter 23. Gemäß einer Ausführungsform der vorliegenden Erfindung ist in dem Hohlleiter 23 ein erster Kühlkanal 31 vorgesehen. Der Kühlmitteleinlass 311 des ersten Kühlkanals 31 befindet sich am ersten Ende 21 und der Kühlmittelauslass 312 des ersten Kühlkanals befindet sich am zweiten Ende 22.

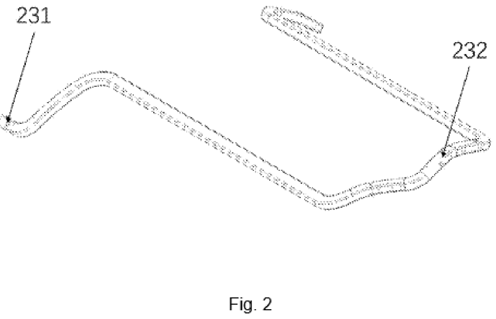

Der Hohlleiter gemäß der vorliegenden Erfindung kann ein Haarnadelleiter sein, wie in Fig. 2 gezeigt. Der Haarnadelleiter 23 umfasst einen Schenkel 231 und einen Kopf 232 und ein Paar von Schenkeln 232 erstrecken sich parallel vom Kopf 232. Der Kopf 232 ist U-förmig. Sowohl am Schenkel 231 als auch am Kopf 232 ist eine Öffnung vorgesehen, wobei am Schenkel 231 der Kühlmitteleinlass 311 und am Kopf 232 der Kühlmittelauslass 312 angeordnet ist. Die in Umfangsrichtung benachbart angeordneten Schenkel 231 sind miteinander verschweißt, wobei die Enden der Schenkel 231 außerhalb des Statorkerns 1 freiliegen. Der Kühlmitteleinlass 311 an den Schenkeln 231 liegt abseits der Schweißstelle an den Schenkeln 231. Beispielsweise können die Öffnungen nach dem Abschließen des Schweißvorgangs gebohrt werden, um einen Kühlmittelauslass oder -einlass zu bilden. Der Schenkel 231 wird in die Nut 11 eingeführt und erstreckt sich nach außen, um das zweite Ende 22 zu bilden, und der Kopf 232 bildet das erste Ende 21.

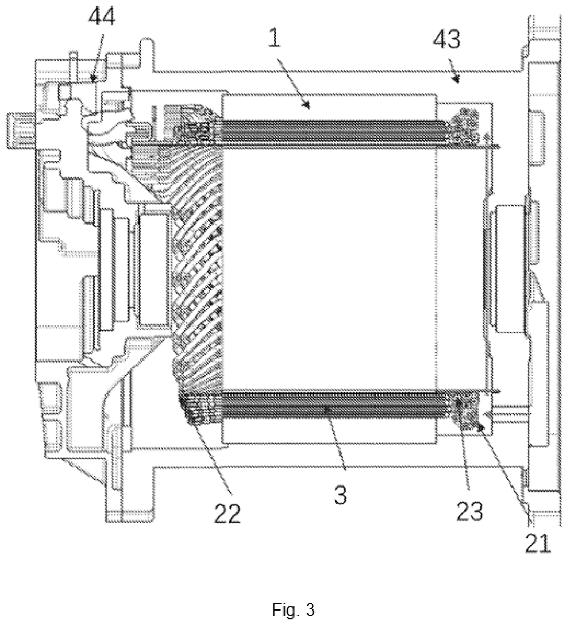

Fig. 3 zeigt eine Querschnittsansicht eines erfindungsgemäßen Stators. Gemäß einer bevorzugten Ausführungsform der vorliegenden Erfindung ist die Öleinlassseite des Motorgehäuses 43 als Dichtraum und die Ölauslassseite des Motorgehäuses 44 als offener Hohlraum ausgebildet. Der hohle Haarnadelleiter 23 wird als erster Kühlkanal verwendet und das Kühlmittel fließt vom ersten Ende 21 zum zweiten Ende 22. Da die Wicklungsstruktur die meiste Wärme erzeugt, leiten die Hohlleiter 23 das Kühlmittel an die Innenfläche des Stators. Der Kühlpfad führt direkt vom Kühlmittel zur Innenfläche des Hohlleiters, wodurch der Kühlpfad deutlich verkürzt wird.

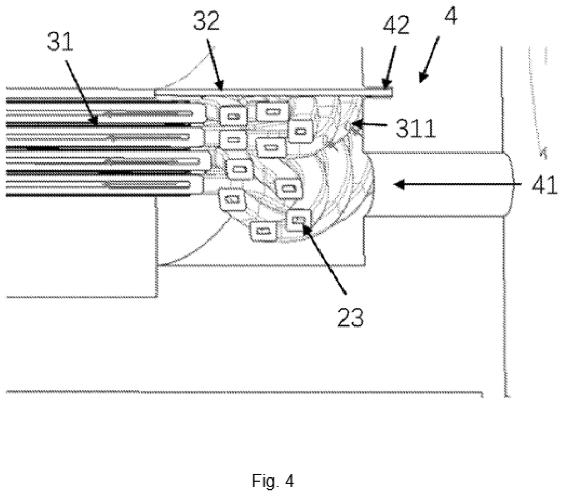

Fig. 4 zeigt eine vergrößerte Ansicht der ersten Endseite 21 aus Fig. 3. Am Motorgehäuse 4 sind ein Einspritzkanal 41 und eine Dichtungsnut 42 vorgesehen. Das Dichtelement 32 wird in die Dichtungsnut 42 eingesetzt und innerhalb der Nut durch Klebstoff abgedichtet, wodurch ein Dichtraum an der Seite des ersten Endes 21 gebildet wird. Das Kühlmittel tritt zunächst durch den Einspritzkanal 41 in den Dichtraum ein und strömt dann in den Kühlmitteleinlass 311 des ersten Kühlkanals 31, wobei es vom ersten Ende 21 zum zweiten Ende 22 fließt, wodurch die Wicklungsstruktur des Stators gekühlt wird.

Obwohl in der vorstehenden Beschreibung mögliche Ausführungsbeispiele beispielhaft beschrieben sind, versteht es sich, dass es durch alle bekannten und ansonsten leicht vorstellbaren technischen Merkmale und Kombinationen der Ausführungsformen noch eine Vielzahl von Ausführungsvarianten gibt. Darüber hinaus ist zu verstehen, dass die beispielhafte Ausführungsform lediglich als Beispiel dient und diese Ausführungsform den Schutzbereich, die Anwendung und die Konstruktion der Erfindung in keiner Weise einschränkt. So existieren beispielsweise viele andere Möglichkeiten für die Struktur und Anordnung des Dichtelements. Zusätzlich zu den Ausführungsbeispielen der Erfindung kann auch in Betracht gezogen werden, dass das Dichtelement und das Motorgehäuse des Elektromotors einstückig ausgebildet sind. Die vorstehende Beschreibung soll dem Fachmann eine technische Anleitung zur Umgestaltung mindestens einer beispielhaften Ausführungsform geben, bei der verschiedene Änderungen vorgenommen werden können, ohne vom Schutzumfang der Ansprüche abzuweichen, insbesondere hinsichtlich der Funktionalität und Struktur von Komponenten.

### Bezugszeichenliste

- 1: Statorkern
- 11: Nut
- 12: Zweiter Kühlkanal
- 2: Wicklungsstruktur
- 21: Erstes Ende
- 22: Zweites Ende
- 23: Haarnadelleiter
- 231: Schenkel
- 232: Kopf
- 3: Kühleinrichtung
- 31: Erster Kühlkanal
- 311: Kühlmitteleinlass
- 312: Kühlmittelauslass
- 32: Dichtelement
- 4: Motorgehäuse
- 41: Einspritzkanal
- 42: Dichtungsnut
- 43: Öleinlassseite des Motorgehäuses
- 44: Ölauslassseite des Motorgehäuses

## Patentansprüche

1. Stator für einen Motor, umfassend einen Statorkern (1), eine Wicklungsstruktur (2) und eine Kühleinrichtung (3), wobei der Statorkern (1) Nuten (11) zum Aufnehmen der einzufügenden Wicklungsstruktur (2) aufweist, und die Wicklungsstruktur (2) jeweils aus den Nuten (11) des Statorkerns an beiden axialen Endflächen herausragt und dabei ein erstes Ende (21) und ein zweites Ende (22) der Wicklungsstruktur bildet, wobei das Leiterelement der Wicklungsstruktur (2) ein Hohlleiter (23) ist, in dem ein erster Kühlkanal (31) der Kühleinrichtung (3) angeordnet ist, ein Kühlmitteleinlass (311) des ersten Kühlkanals (31) sich im ersten Ende (21) befindet und ein Kühlmittelauslass (312) des ersten Kühlkanals sich im zweiten Ende (22) befindet, wobei die Kühleinrichtung (3) ein Dichtelement (32) aufweist, das mit dem den Stator umgebenden Motorgehäuse (4) auf der Seite des ersten Endes (21) einen den Kühlmitteleinlass (311) umschließenden Dichtraum bildet.

2. Stator nach Anspruch 1, **dadurch gekennzeichnet, dass** das Motorgehäuse (4) einen Einspritzkanal (41) zum Einspritzen eines Kühlmittels in den Dichtraum aufweist.

3. Stator nach Anspruch 1, **dadurch gekennzeichnet, dass** am Motorgehäuse (4) eine Dichtungsnut (42) vorgesehen ist und das Dichtelement (32) durch einen Klebstoff in der Dichtungsnut (42) befestigt ist.

4. Stator nach Anspruch 1, **dadurch gekennzeichnet, dass** das Dichtelement (32) einstückig mit dem Motorgehäuse (4) ausgebildet ist.

5. Stator nach Anspruch 1, **dadurch gekennzeichnet, dass** das Motorgehäuse (4) auf der Seite des zweiten Endes (22) als offener Hohlraum ausgebildet ist.

6. Stator nach einem der Ansprüche 1 bis 5, **dadurch gekennzeichnet, dass** die Wicklungsstruktur (2) eine Haarnadelwicklung ist, wobei die Haarnadelwicklung einen Haarnadelleiter (23) mit einem Schenkel (231) und einem Kopf (232) aufweist, der Schenkel (231) in die Nut (11) eingesetzt ist und sich nach außen erstreckt, um das zweite Ende (22) zu bilden, und der Kopf (232) das erste Ende (21) bildet, wobei der Kühlmitteleinlass (311) am Schenkel (231) vorgesehen ist und der Kühlmittelauslass (312) am Kopf (232) vorgesehen ist.

7. Stator nach Anspruch 6, **dadurch gekennzeichnet, dass** das axiale Ende des Schenkels (231) verschweißt ist und eine Öffnung in radialer Richtung des Schenkels (231) als Kühlmittelauslass (312) des ersten Kühlkanals (31) vorgesehen ist.

8. Stator nach Anspruch 7, **dadurch gekennzeichnet, dass** der Kühlmittelauslass (312) von der Schweißstelle des Schenkels entfernt liegt.

9. Stator nach einem der Ansprüche 1 bis 5, **dadurch gekennzeichnet, dass** der Statorkern (1) am Außenumfang der Nut (11) einen zweiten Kühlkanal (12) aufweist, dessen Kühlmitteleinlass sich im Dichtraum befindet.

10. Motor, **dadurch gekennzeichnet, dass** der Motor einen Stator nach einem der Ansprüche 1 bis 9 aufweist.
